# EUROPEAN PATENT SPECIFICATION

(11) **EP 0 723 400 B1**
(45) Date of publication and mention of the grant of the patent: **07.03.2001**
(21) Application number: 94926958.3
(22) Date of filing: 20.09.1994
(51) Int. Cl.: A23C 21/00, A23C 9/14, A23L 2/00

(54) **NUTRITIONAL DRINK**
NÄHRWERTIGES GETRÄNK
BOISSON NUTRITIVE

(30) Priority: 12.10.1993 FI 934494
(43) Date of publication of application: 31.07.1996
(73) Proprietor: Xonda Oy, 21260 Raisio (FI)
(72) Inventor: JALONEN, Harry, FIN-20610 Turku (FI); LUOPA, Jyrki, FIN-02430 Masala (FI); AALTO, Jouni, FIN-21260 Raisio (FI)
(74) Representative: Öhman, Ann-Marie
(86) International application number: FI9400417
(87) International publication number: WO9510192

(56) References cited:
- EP-A- 0 173 999
- EP-A- 0 471 890
- WO-A-93/08264
- GB-A- 1 211 876
- GB-A- 1 573 995
- US-A- 4 051 235

## Description

The invention relates to a nutritional drink product based on colostrum, for the improvement of physical performance and recovery from the effects of physical exercise.

Drinks that restore the energy and fluid balance, suitable for athletes and persons occupied in strenuous physical labour have been prepared previously. These preparations usually contain mineral substances and sources of energy, such as different kinds of sugars. Drinks based on milk may be divided in three categories: drinks containing milk sugar (lactose), drinks based on the mineral substances contained in milk, and drinks based on the proteins contained in milk. In the European patent publication EP 499165 drinks are described which contain sugars, such as lactose, galactose and glucose, extracted from milk. In the European patent publication EP 113898 drinks are described which are based on the proteins recovered from milk whey. In the Japanese patent application publication JP 3259070 drinks based on the mineral substances of milk, suitable for athletes, are described.

The above-mentioned drinks, however, are mainly useful only as preparations restoring fluid balance and as sources of energy.

Especially elite athletes are handicapped by the all too slow recovery after physical exercise. The slow recovery is due to e.g. damage to muscle cells.

Creatine kinase (CK) is an intracellular enzyme whose concentration in blood increases during various muscular diseases. The cellular damage following sports performances also results in the leaking of the intracellular enzyme into the circulatory system, i.e. sports performances also result in increased blood CK values. Consequently, blood CK concentration may be used as a measure of cellular damage. It has been shown in the literature (Houmard et al., Int. J. of Sports Medicine, 11(1), February 1990, pp. 41-45 and Kanter, M.M. et al., Eur. J. of Applied Physiology and Occupational Physiology, 57(1), 1988, pp. 60-63) that the blood CK concentration of athletes increases during a sports performance. Guezennec, C.Y. et al. (Science & Sports 1(3), Oct. 1986, pp. 255-263) state that increased blood CK concentration reflects the muscle cell damage observed during the period of recovery. Cade, J.R. et al. (Eur. J. of Applied Physiology 63(3/4), 1991, pp. 210-215) state that nourishment affects the increased blood CK values of athletes during the period of recovery. They concluded that ingestion of milk proteins had a beneficial effect on the recovery process in athletes as measured by CK concentration.

The preparation of cellular damage cannot be helped by adding energy and minerals to the organism. Consequently, known nutrients are ineffective in this task.

During periods of strenuous exercise, such as in training camps, an athlete endures harder than average training stress. This means that he will have insufficient time for recovery. During exercise an athlete senses an increased mental as well as physical fatigue in relation to the duration of the training camp. The quality of the exercises decreases with time spent in the training camp for the afore-mentioned reasons: the mental engagement in individual exercises decreases, and physical performance decreases faster as the exercises continue.

A surprising observation has been made lately: By administering the athletes sterilized whey of colostrum it has been possible to significantly accelerate their recovery after exercise. The said whey of colostrum has, in addition, been observed to simultaneously improve performance and the general well-being of the athletes.

The invention thus relates to a nutritional drink based on colostrum, for the improvement of physical performance and for the acceleration of the recovery process. The product comprises a colostrum fraction obtained by the separation of fat from colostrum by a conventional method, possibly by the precipitation of the casein of the defatted colostrum obtained in this manner and by the separation of the precipitated casein, as well as by the recovery of the whey obtained as a filtrate. Finally, the whey or the defatted colostrum is sterilized.

EP-A-0 471 890 describes a process for making steril filtrated colostrum with a highest possible amount of all proteins. Colostrum cannot be sterilized by heat (pasteurization), because heating denatures the proteins in colostrum and coagulates it. Sterilization is done in practice by removing bacteria by microfiltration or ultrafiltration.

In both cases, fat must first be removed from colostrum, e.g. by filtering or by centrifuging with a conventional centrifuge or with a dairy separator. Especially in the case of sterilization by microfiltration it is advisable to remove casein from colostrum before transferring it onto the filter, because casein may easily clog the microfilter. Microfiltration usually means filtration within porosity range of 0.05 µm - about 5 µm. Casein may be removed by e.g. adjusting the mixture to approximately pH 4.5 by adding e.g. hydrochloric acid. Casein may alternatively be precipitated with enzymes. The resulting casein-containing precipitate may be separated from the liquid by e.g. filtering. The filtrate, which is a clear liquid, is called whey. The whey will then be neutralized to approximately pH 7.

A preferable method for the sterilization of whey is microfiltration. Tangential filtration with membranes of pore size 0.1 - 0.45 µm is preferred. Prefiltration of whey with a coarse filter, e.g. a cartridge filter of about 10 µm pore size, before transfer onto the microfilter, is especially recommended. Better recovery is then obtained.

According to another alternative method, whey may be sterilized with an ultrafilter with a cut-off value of more than 200000 Da.

Yet another alternative method for sterilization is to transfer the defatted colostrum, without previous removal of casein, directly onto ultrafilter (cut-off 200000 Da). The ultrafilter also removes the casein. Casein will cause no technical problems in this method, because casein molecules, due to their size, which is considerably larger than the pores of the filter, do not clog the filter.

It is unnecessary and inadvisable to use filters with smaller pore size, because then a large part of beneficial immunoglobulins would also be removed.

Suitable additives such as preservatives, lactase or flavouring may further be added to the sterilized product. A lemon flavouring gives whey a pleasant smell and taste. The function of added lactase is mainly to break down lactose, and it makes the said product suitable for persons suffering from lactose intolerance. In addition, added lactase has been observed to improve the taste of the said product.

The invention will be illustrated with the following examples, and the results illustrating the potency of the preparation will be shown in the following figures, in which
Figure 1 shows the creatine kinase values (IU/ml) of a group of athletes consuming colostrum whey (filled squares) and of a control group (open squares), measured in the morning, during the first camp
Figure 2 shows the creatine kinase values (IU/ml) of a group of athletes consuming colostrum whey (filled squares) and of a control group (open squares), measured in the evening, during the first camp
Figure 3 shows the creatine kinase values (IU/ml) of a group of athletes consuming colostrum whey (filled squares) and of a control group (open squares), measured in the morning, during the second camp
Figure 4 shows the creatine kinase values (IU/ml) of a group of athletes consuming colostrum whey (filled squares) and of a control group (open squares), measured in the evening, during the second camp
Figure 5 shows the time (s) required by a group of athletes consuming colostrum whey (filled colums) and of a control group (open columns), for skiing 1.5 kilometers on roller-skis at the beginning and the end of the first camp
Figure 6 shows the increase in creatine kinase values (IU/ml) of a group of athletes consuming colostrum whey (filled columns) and of a control group (open columns) at the end of a roller-ski test (1) and a running test (2) during the first camp

### Example 1

### a) preparation of colostrum whey

Frozen colostrum obtained from the 1st - 5th milking was thawed. The thawed colostrum was defatted with a conventional dairy separator. Casein was precipitated from the defatted colostrum with hydrochloric acid. The precipitate was separated from the whey with a sieve. The whey recovered was frozen.

### b) sterilization of colostrum whey

The whey obtained in step a) was filtered with a tangential microfiltration membrane of pore size 0.1 µm. Commercial lactase preparation was added to the sterilized whey at 0.05% (v/v).

### Example 2

The whey of Example 1 was filtered with a tangential microfiltration membrane of 0.22 µm pore size. Commercial lactase preparation was added to the sterilized whey at 0.05% (v/v).

### Example 3

The whey of Example 1 was prefiltered through a 10 µm cartridge filter. The whey was then filtered with a tangential microfiltration membrane of 0.22 µm pore size. Commercial lactase preparation was added to the sterilized whey at 0.05% (v/v).

### Example 4

The whey of Example 1 was filtered with a tangential microfiltration membrane of 0.45 µm pore size. Commercial lactase preparation was added to the sterilized whey at 0.05% (v/v).

### Example 5

The defatted colostrum prepared in Example 1 was filtered with a tangential ultrafiltration membrane with 300000 Da cut-off value. Commercial lactase preparation was added to i the sterilized whey at 0.05% (v/v).

Colostrum whey sterilized according to Example 1 was used in tests with athletes, which tests are described in the following section.

The efficiency of the nutritional drink based on the said invention was tested during two different training camp periods. The differences in recovery, performance and general well-being of athletes consuming colostrum whey and those consuming ordinary milk whey were evaluated and compared.

The tests were carried out as cross-over tests during two consecutive training camps. Eight elite skiers participated in both camps (athletes A - H). The skiers were distributed in two groups (four skiers per group). During the first camp skiers A - D constituted the group consuming colostrum whey while skiers E - H constituted the group consuming ordinary milk whey (the control group). The dose for each group was 600 ml per day and per person. During the second camp the skiers A - D constituted the control group consuming ordinary milk whey while skiers E - H constituted the group consuming colostrum whey. The test skiers did not know whether they consumed colostrum whey or ordinary milk whey.

Ordinary cross-country skiing on the one hand and roller-skiing and running on the other hand were in the program of the camps. Both groups followed the same training program. During both camps, the creatine kinase values of the athletes were obtained in the mornings and in the evenings during seven days. The performances of each group were also evaluated in the roller-ski as well as the running tests.

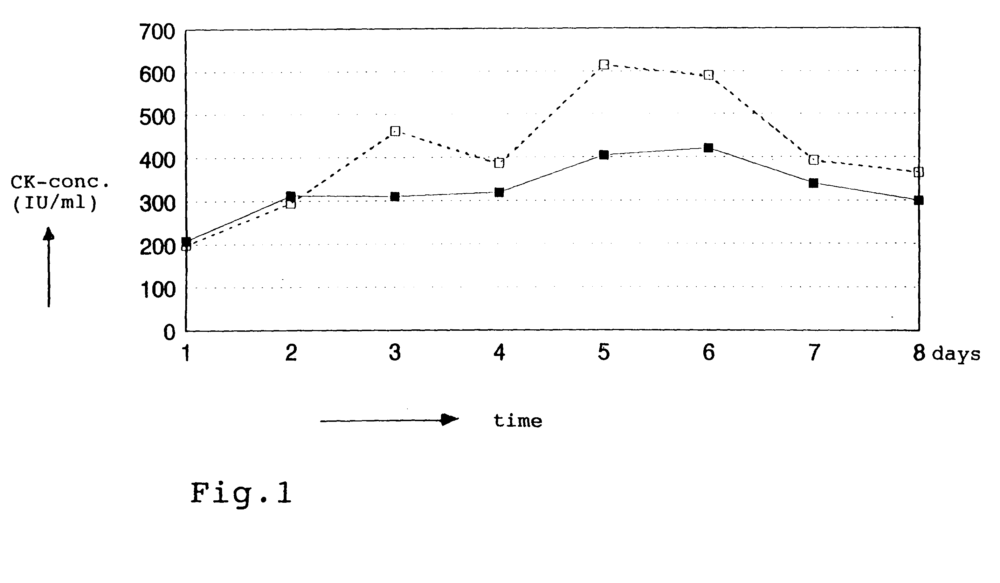

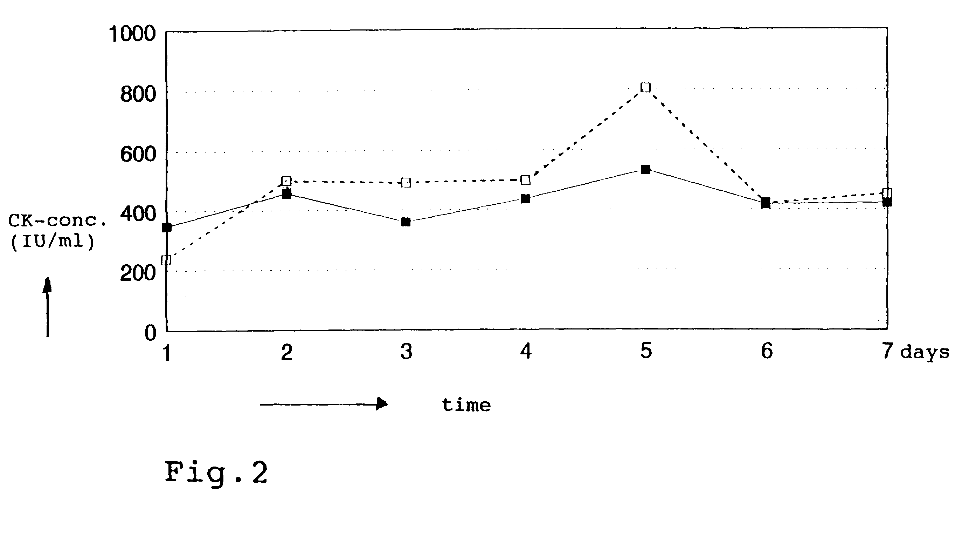

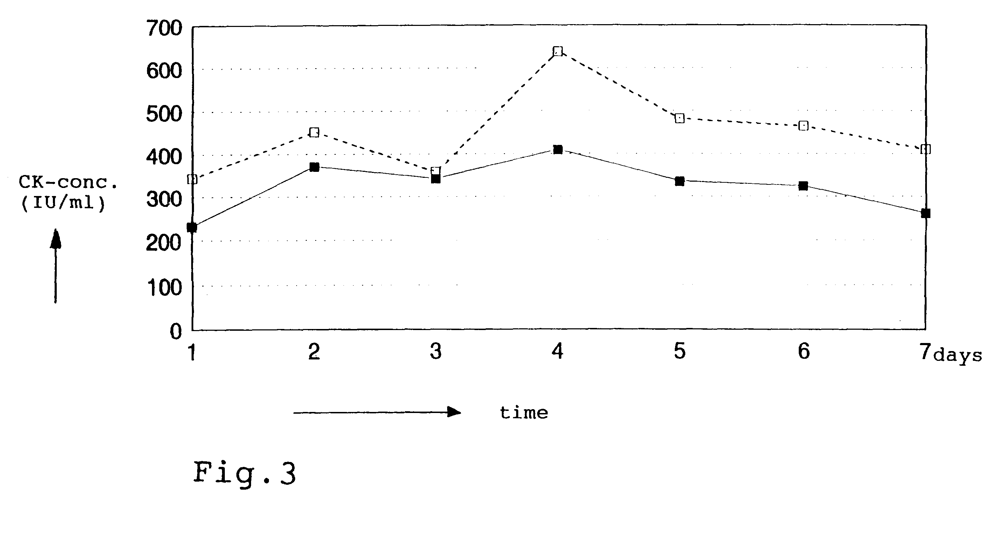

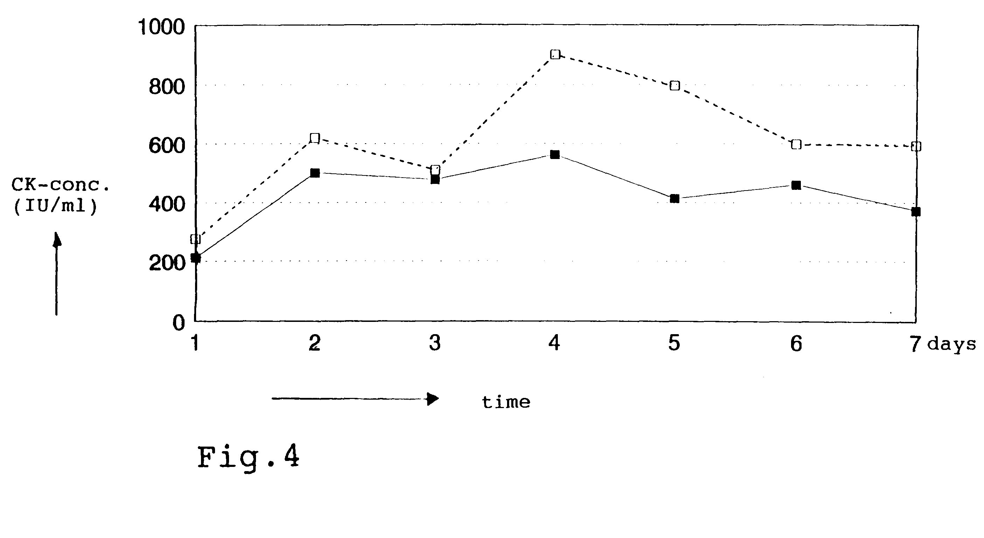

Figures 1 - 4 show that the creatine kinase values of the athlete group consuming colostrum whey (filled squares) were lower than the creatine kinase values of the control group consuming ordinary milk whey (open squares). This is a clear indication of the beneficial effect of colostrum whey on the recovery of the athlete. The decline in CK value in the control group after the sixth day, seen in Figure 1, was due to the fact that the group was unable to carry out all the exercises of the period according to plan, and was forced to cut down their exercises.

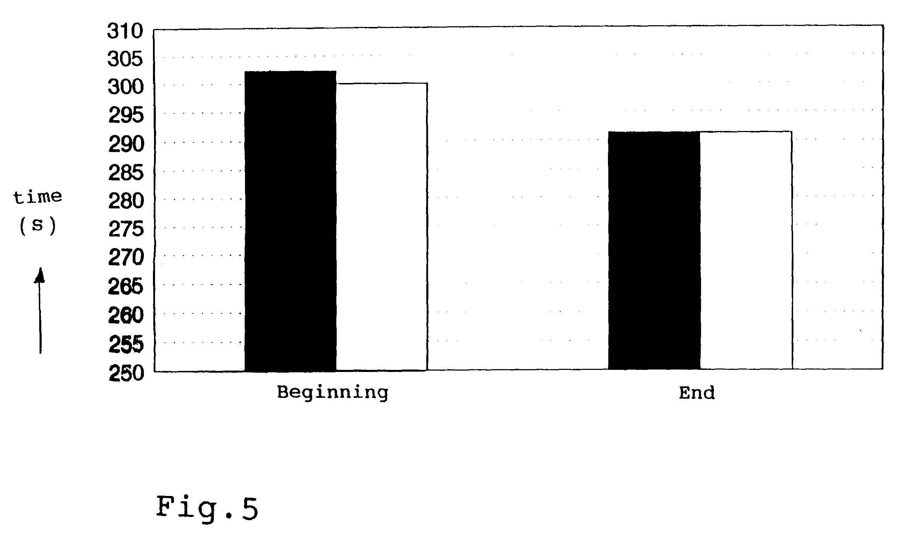

Figure 5 shows that the performance of both groups of athletes in the roller-ski test (measured by the time in seconds needed for skiing 1.5 km) improves from the beginning to the end of the training camp. The values measured for the group consuming colostrum whey (filled columns), however, are better than the values for the control group consuming ordinary milk whey (open columns). This allows the conclusion that colostrum whey has a beneficial effect also on physical performance.

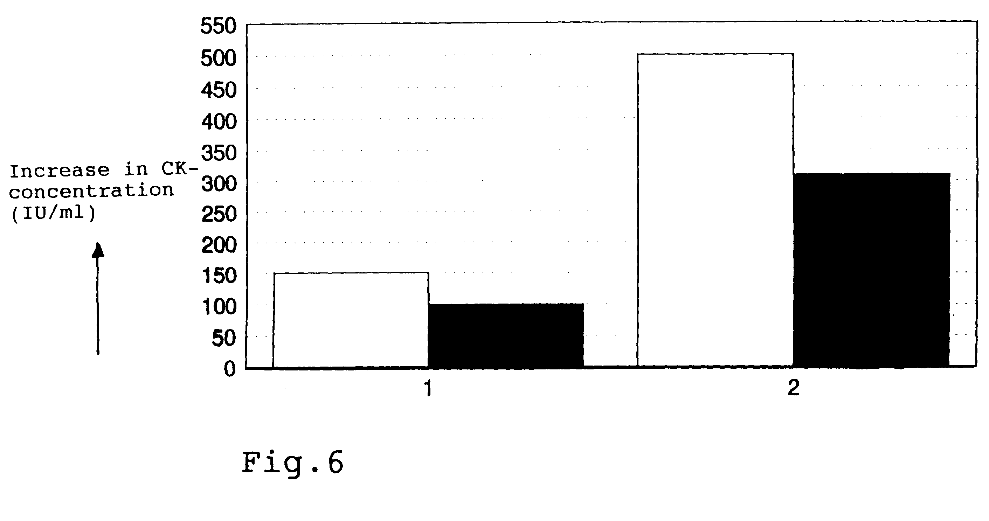

Figure 6 shows that the creatine kinase values of both groups of athletes increase after the roller-ski test (1) as well as after the running test (2). The increase in the CK values of the group of athletes consuming colostrum whey (filled columns), after both kinds of exercise is, however, considerably smaller than the increase in the values of creatine kinase of the control group consuming ordinary milk whey (open columns).

It should be understood that the sterilized colostrum whey products presented here as examples are intended to illustrate the invention and not to restrict its scope of application. A specialist in the field will appreciate that the different applications of the said invention may vary within the scope of the claims to be presented in the following section.

## Claims

1. A nutritional drink improving physical performance and recovery, based on colostrum, characterized in that it comprises a colostrum fraction obtainable by defatting the colostrum with a conventional method, and either
i) precipitating the casein contained in the defatted colostrum obtained by the above method, separating the precipitated casein, recovering the whey obtained as filtrate, and sterilizing the whey either by microfiltration or by ultrafiltration with a filter with a molecular size cut-off of more than 200000 Da, or
ii) sterilizing the defatted colostrum by ultrafiltration with a filter with a molecular size cut-off of more than 200000 Da.

2. The product according to Claim 1 characterized in that the whey has been prefiltered with a coarser filter before microfiltration.

3. The product according to Claim 1 or 2 characterized in that it further comprises preservatives, lactase or flavouring.

4. The product according to Claim 3 characterized in that it further comprises a commercial lactase preparation to about 0.05% (v/v) of the sterilized product.

## Patentansprüche

1. Nährgetränk, welches die physische Leistungsfähigkeit und Erholung verbessert, auf der Basis von Kolostrum, dadurch **gekennzeichnet**, dass es eine Kolostrum-Fraktion umfasst, die erhältlich ist durch Entfetten des Kolostrums durch ein herkömmliches Verfahren und entweder
i) Fällen des in dem entfetteten Kolostrum, das durch das oben genannte Verfahren erhalten worden ist, enthaltenen Caseins, Abtrennen des ausgefällten Caseins, Gewinnen der als Filtrat erhaltenen Molke und Sterilisieren der Molke durch Mikrofiltration oder Ultrafiltration mit einem Filter mit einem Molekulargrößenausschluss von mehr als 200000 Da oder durch
ii) Sterilisation des entfetteten Kolostrums durch Ultrafiltration mit einem Filter mit einem Molekulargrößenausschluss von mehr als 200000 Da.

2. Produkt nach Anspruch 1, dadurch **gekennzeichnet**, dass die Molke mit einem gröberen Filter vor der Mikrofiltration vorgefiltert worden ist.

3. Produkt nach Anspruch 1 oder 2, dadurch **gekennzeichnet**, dass es weiterhin Konservierungsmittel, Lactase oder Geschmacksstoffe umfasst.

4. Produkt nach Anspruch 3, dadurch **gekennzeichnet**, dass es weiterhin eine handelsübliche Lactase-Zubereitung in einer Menge von etwa 0,05% (V/V) des sterilisierten Produkts umfasst.

## Revendications

1. Boisson nutritive pour améliorer les performances et la récupération physiques, basée sur le colostrum, caractérisée en ce qu'elle comprend une fraction de colostrum qui peut être obtenue par dégraissage du colostrum au moyen d'un procédé classique, et
i) soit par précipitation de la caséine contenue dans le colostrum dégraissé obtenu par le procédé ci-dessus, séparation de la caséine précipitée, récupération du petit-lait obtenu en tant que filtrat, et stérilisation du petit-lait soit par microfiltration soit par ultrafiltration à l'aide d'un filtre ayant une coupure en taille moléculaire de plus de 200 000 Da,
ii) soit par stérilisation du colostrum dégraissé par ultrafiltration à l'aide d'un filtre ayant une coupure en taille moléculaire de plus de 200 000 Da.

2. Produit selon la revendication 1 caractérisé en ce que l'on filtre au préalable le petit-lait à l'aide d'un filtre grossier avant la microfiltration.

3. Produit selon la revendication 1 ou 2, caractérisé en ce qu'il comprend, en plus, des conservateurs, de la lactase ou un agent de sapidité.

4. Produit selon la revendication 3 caractérisé en ce qu'il comprend, en plus, une préparation de lactase commerciale à environ 0,05% (v/v) du produit stérilisé.
